# EUROPÄISCHE PATENTSCHRIFT

(11) **EP 3 836 566 B1**
(45) Veröffentlichungstag und Bekanntmachung des Hinweises auf die Patenterteilung: **10.08.2022**
(21) Anmeldenummer: 20209867.9
(22) Anmeldetag: 25.11.2020
(51) Int. Cl.: H04R 25/00

(54) **VERFAHREN ZUM BETRIEB EINES HÖRGERÄTESYSTEMS UND HÖRGERÄTESYSTEM**
HEARING AID SYSTEM AND METHOD FOR OPERATING A HEARING AID SYSTEM
PROCÉDÉ DE FONCTIONNEMENT D'UN SYSTÈME AUDITIF ET SYSTÈME AUDITIF

(30) Priorität: 13.12.2019 DE 102019219563
(43) Veröffentlichungstag der Anmeldung: 16.06.2021
(73) Patentinhaber: Sivantos Pte. Ltd., Singapore 539775 (SG)
(72) Erfinder: ASCHOFF, Stefan, 90542 Eckental (DE); SCHMIDT, Alexander, 90425 Nürnberg (DE)
(74) Vertreter: FDST Patentanwälte

(56) Entgegenhaltungen:
- EP-A1- 2 814 264
- JP-A- 2019 185 077
- US-A1- 2013 144 623
- US-A1- 2016 092 562

## Beschreibung

Die Erfindung betrifft ein Verfahren zum Betrieb eines Hörgerätesystems. Des Weiteren betrifft die Erfindung auch ein Hörgerätesystem.

Hörgeräte dienen insbesondere in Form von Hörhilfegeräten der Versorgung von in ihrem Hörvermögen eingeschränkten Personen. Hörgeräte sind dazu regelmäßig mit wenigstens einem Mikrofon zur Aufnahme von Umgebungsgeräuschen, einem Signalprozessor zur (optional frequenzspezifischen) Filterung, Verstärkung und/oder Dämpfung von mit dem Mikrofon erfassten Signalen oder Signalbestandteilen und einem Lautsprecher zur Ausgabe der prozessierten Signale an das Gehör der das Hörgerät tragenden Person (dem sogenannten Hörgeräteträger) ausgestattet. Neben den Hörhilfegeräten fallen dabei auch Kopfhörer, Headsets, sogenannte "Hearables" oder dergleichen unter den Begriff "Hörgerät". Insbesondere bei Hörhilfegeräten kann anstelle des Lautsprechers auch ein sogenannter Knochenleitungshörer oder ein Cochlea-Implantat zur mechanischen bzw. elektrischen Stimulation des Gehörs des Hörgeräteträgers zum Einsatz kommen.

Häufig handelt es sich bei Hörgeräteträgern um vergleichsweise ältere Personen, bei denen das Hörvermögen aufgrund des Alters, gegebenenfalls auch zusätzlich aufgrund von Schädigungen (bspw. durch beruflich bedingten Lärm, Knalltraumata etc.) nachgelassen hat. Solche Personen weisen allerdings teilweise auch Schwächen bei der Erinnerung an Informationen bezüglich anderer Personen auf und/oder bei der Informationsbeschaffung an sich. Dadurch kann eine soziale Interaktion solcher Personen abnehmen, da diese sich bspw. schämen, bei anderen Personen, insbesondere Bekannten, zu deren Hintergrund nachzufragen, im Fall von vermindertem Erinnerungsvermögen womöglich auch mehrfach.

US2013/0144623 zeigt ein Hörgerät, das einen Gesprächspartner des Hörgerätenutzers durch Stimmerkennung, eventuell unter Zuhilfenahme eines sozialen Netzwerks, identifiziert und dem Hörgerätenutzer per Sprachausgabe den Namen Gesprächspartners mitteilt.

Der Erfindung liegt somit die Aufgabe zugrunde, Hörgeräteträgern soziale Interaktion mit anderen Personen angenehmer zu gestalten.

Diese Aufgabe wird erfindungsgemäß gelöst durch ein Verfahren mit den Merkmalen des Anspruchs 1. Des Weiteren wird diese Aufgabe erfindungsgemäß gelöst durch ein Hörgerätesystem mit den Merkmalen des Anspruchs 8. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Verfahren dient zum Betrieb eines Hörgerätesystems, das zumindest ein Hörgerät umfasst. Verfahrensgemäß wird dabei zunächst eine für eine Begegnung zwischen einem das Hörgerät tragenden Hörgeräteträger und einer - vorzugsweise dem Hörgeräteträger bekannten - andere Person charakteristische Information empfangen. Anhand dieser Information wird auf ein vorliegendes oder bevorstehendes Aufeinandertreffen des Hörgeräteträgers mit dieser anderen Person geschlossen. Daraufhin wird eine Hintergrundinformation über die Person von wenigstens einem sozialen Netzwerk eingeholt. Diese Hintergrundinformation über die andere Person wird zumindest teilweise in Audiodaten gewandelt. Diese Audiodaten werden anschließend mittels des Hörgeräts des Hörgeräteträgers diesem akustisch dargeboten.

Vorzugsweise wird dieses Verfahren - zumindest hinsichtlich der Informationsbeschaffung - vollautomatisch durchgeführt. In diesem Fall werden dem Hörgeräteträger somit vorteilhafterweise ohne sein aktives Zutun die vorstehend genannten Hintergrundinformation zu der Person, der der Hörgeräteträger aktuell begegnet oder bevorstehend begegnen wird, zur Verfügung gestellt. Alternativ werden dem Hörgeräteträger "Zwischenstände" des Verfahrens mitgeteilt und/oder von ihm Freigaben für die nächsten Schritte eingeholt. Somit braucht der Hörgeräteträger - in beiden Varianten - also nicht zur Hintergrundinformation bei der anderen Person nachfragen, was dem Hörgeräteträger mitunter unangenehm sein kann, oder selbst proaktiv in einem sozialen Netzwerk suchen, was gerade für ältere Hörgeräteträger aufgrund von Hemmungen gegenüber der Bedienung von Computertechnik nicht möglich ist. Deshalb bietet das erfindungsgemäße Verfahren ein hohes Potential, dass sich ein gegebenenfalls zurückgezogener Hörgeräteträger weiter oder wieder in sozialen Interaktionen beteiligt.

Im Hinblick auf die "Zwischenstände" wird dem Hörgeräteträger bspw. die Identität der ihm begegnenden Person mitgeteilt sowie abgefragt, ob über diese Person eine Hintergrundinformation beschafft werden sollen.

Als charakteristische Information für die Begegnung des Hörgeräteträgers mit der Person wird in einer Verfahrensvariante ein bei einem Anmelden eines elektronischen Geräts, insbesondere eines Mobilgeräts, vorzugsweise eines Smartphones, einer Smartwatch oder eines Tablets der bekannten Person an einem lokalen Netzwerk (insbesondere einem Drahtlosnetzwerk) des Hörgeräteträgers übermittelter Identifikator herangezogen.

In einer grundsätzlich denkbaren Variante ist das Hörgerät selbst dazu eingerichtet, ein lokales Drahtlosnetzwerk mit anderen elektronischen Geräten aufzubauen.

Bevorzugt ist das Hörgerät aber - optional unmittelbar, vorzugsweise aber mittelbar über ein elektronisches Gerät, insbesondere ein Mobilgerät, bspw. ein Smartphone, eine Smartwatch, ein Tablet oder dergleichen des Hörgeräteträgers - in ein Netzwerk, vorzugsweise ein "Heimnetzwerk" eingebunden, insbesondere an einem Router des Hörgeräteträgers angemeldet.

Bei der Anmeldung eines elektronischen Geräts im Netzwerk, vorzugsweise am entsprechenden Router wird dabei die sogenannte MAC-Adresse oder ein vergleichbarer, eindeutiger Identifikator dieses Geräts an alle im Netzwerk befindlichen, d. h. (vorzugweise am Router) angemeldeten Geräte übermittelt. Somit wird dem Hörgerät, vorzugsweise zumindest dem elektronischen Gerät des Hörgeräteträgers der Identifikator des elektronischen Geräts der anderen Person übermittelt, sobald dieses Gerät sich im Netzwerk anmeldet.

Optional muss der Hörgeräteträger hierfür einen Netzwerkschlüssel an die andere Person mitteilen, damit sich deren Gerät (zumindest beim ersten Mal) im Netzwerk anmelden kann. Alternativ - insbesondere im Fall eines offen betriebenen Netzwerks - kann die Nutzung eines solchen Netzwerkschlüssels auch entfallen.

Optional ist das vorstehend genannte (Mobil-) Gerät des Hörgeräteträges dazu eingerichtet ein lokales Netzwerk auszubilden, insbesondere indem es seinerseits sein Kommunikationsmodul, insbesondere ein Drahtlos- (vorzugsweise ein WLAN-Funkverbindungs-) Modul als einen Zugangspunkt (bspw. einen "wireless acces point") konfiguriert, einen (insbesondere DHCP-) Server sowie eine Internetverbindung mittels des Mobilfunknetzes bereitstellt. In diesem Fall ist das Vorhandensein des Routers also nicht erforderlich.

In einer alternativen Verfahrensvariante wird als charakteristische Information für die Begegnung ein in einem elektronischen und optional zumindest mittelbar mit dem Hörgerät des Hörgeräteträgers in Verbindung stehenden Kalender hinterlegtes, anstehendes Ereignis herangezogen. Bspw. ist ein solcher Kalender in dem vorstehend beschriebenen (Mobil-) Gerät des Hörgeräteträgers installiert oder verknüpft. Der für ein Treffen mit der anderen Person in einem solchen Kalender gespeicherte Termin wird also vorteilhafterweise genutzt, um auf die tatsächliche Begegnung zwischen dem Hörgeräteträger und der anderen Person zu schließen. Bspw. wird hierbei eine für diesen Termin hinterlegte Erinnerung als Auslöser (insbesondere als die vorstehend genannte charakteristische Information) für das hier und im Folgenden beschriebene Verfahren zur Einholung der Hintergrundinformation und deren Mitteilung an den Hörgeräteträger herangezogen. Alternativ wird das entsprechende Verfahren zu insbesondere nutzerspezifisch vorgegebenen Zeitpunkten, bspw. zu Beginn des Termins, 10 Minuten vorher oder dergleichen ausgelöst. Dies hat den Vorteil, dass die Hintergrundinformation als eine Art Vorbereitung auf den Termin eingeholt und an den Hörgeräteträger übermittelt werden kann.

In einer weiteren zweckmäßigen Verfahrensvariante wird bei Vorliegen der charakteristischen Information für die Begegnung ermittelt, ob der Hörgeräteträger mit der Person bekannt ist. Vorzugsweise wird dabei ein insbesondere elektronisch (vorzugsweise auf dem vorstehend beschriebenen elektronischen Gerät) gespeichertes Adressbuch des Hörgeräteträgers nach dieser Person durchsucht. Vorzugsweise wird bspw. bei einem erstmaligen Einloggen dieser Person im Netzwerk deren Identifikator mit dem Adressbucheintrag verknüpft, so dass bei einem erneuten Einwählen anhand des Identifikators die Identität der Person einfach und eindeutig festgestellt werden kann.

In einer Variante kann der Hörgeräteträger den Identifikator der anderen Person (bei deren erstmaligem Einloggen im Netzwerk) selbst dem Adressbucheintrag zuordnen. Beispielsweise steuert der Router hierzu beim erstmaligen Einloggen eine Applikation auf dem Gerät des Hörgeräteträgers an, die dem Hörgeräteträger das "Einlogg-Ereignis" mitteilt und nach der Identität der Person, die sich gerade eingeloggt hat und die der Hörgeräteträger - da er üblicherweise seinen Netzwerkschlüssel mitteilen muss - kennen sollte, fragt.

Bevorzugt stellt der Router des Hörgeräteträgers aber beim insbesondere erstmaligen Einloggen der anderen Person eine Verbindung zu einem Webservice her, der wiederum auf dem (Mobil-) Gerät der anderen Person eine Website aufbaut. Auf dieser Website wird die andere Person aufgefordert, ihren Namen (bspw. ein "Alias") und gegebenenfalls auch weitere persönliche Daten (bspw. ein Photo) einzugeben bzw. mittels der Website auf den Webservice hochzuladen. Letzterer verknüpft dann diese Daten mit dem Identifikator. Optional werden die mit dem Identifikator verknüpften Daten an das (Mobil-) Gerät oder den Router des Hörgeräteträgers übermittelt und/oder in einem dem Webservice zugeordneten Speicher abgelegt. Hierdurch braucht der Hörgeräteträger selbst nicht aktiv werden.

In einer (insbesondere zur Nutzung des vorstehenden Kalenders) alternativen oder auch zusätzlichen Verfahrensvariante wird als charakteristische Information für die Begegnung eine Information, vorzugsweise eine Mitteilung, die von einem von der anderen Person genutzten Dienst zur Mitteilung deren Standorts genutzt wird, herangezogen. Vorzugsweise ist ein solcher Dienst auf dem elektronischen Gerät der anderen Person lauffähig installiert und bspw. dazu eingerichtet - insbesondere automatisch - dem Hörgeräteträger (optional auch anderen, bspw. allen "Kontakten", die im Adressbuch des elektronischen Geräts der anderen Person hinterlegt sind) den Standort der anderen Person mitzuteilen. Vorzugsweise ist dazu der gleiche Dienst (vorzugsweise in Form einer Software-Applikation) auf dem (Mobil-) Gerät des Hörgeräteträgers installiert und mit dem von der anderen Person genutzten Dienst (insbesondere deren Software-Applikation) zum Informationsaustausch verknüpft.

In einer weiteren alternativen oder auch zusätzlichen Verfahrensvariante wird ein Stimmerkennungsmodul des Hörgeräts des Hörgeräteträgers genutzt, um die Stimme der anderen Person zu erkennen (insbesondere durch einen Vergleich mit hinterlegten Stimm-Mustern bekannter Personen) und somit auf die Begegnung mit dieser anderen Person zu schließen. Anders ausgedrückt wird die erkannte Stimme als charakteristische Information für die Begegnung mit der (in diesem Fall vorzugsweise hinsichtlich ihres Stimm-Musters bereits bekannten, also hinterlegten) anderen Person herangezogen.

Um die Hintergrundinformation über die Person einzuholen, werden in einer bevorzugten Verfahrensvariante mit der Person verknüpfte Identifikationsdaten einem insbesondere cloudbasierten Abfragedienst zur Verfügung gestellt - beispielsweise durch den vorgenannten Webservice, den Router oder das (Mobil-) Gerät des Hörgeräteträgers. Diese Identifikationsdaten enthalten insbesondere den Namen (insbesondere Vorname und Nachname), ein Geburtsdatum, einen Accountnamen (oder auch: "Alias" oder "Nickname"; sofern bekannt), eine E-Mail-Adresse und/oder dergleichen. Mittels des Abfragedienstes werden insbesondere auf Basis der Identifikationsdaten Abfragen zu der anderen Person an wenigstens ein, vorzugsweise verschiedene soziale Netzwerke verteilt.

In einer Variante "fragt" der Abfragedienst direkt bei einem sozialen Netzwerk an. Anders ausgedrückt sendet der Abfragedienst eine - vorzugsweise für das jeweilige Netzwerk formulierte - Anfrage an eine Eingangsschnittstelle des sozialen Netzwerks, vergleichbar zu einer Personensuche im Internet. In einer besonders zweckmäßigen Variante ist aber vorzugsweise seitens des Herstellers des Hörgeräts eine sogenannte third party Software (auch: "developer module") bei dem oder verschiedenen sozialen Netzwerken platziert (insbesondere von dem entsprechenden sozialen Netzwerk "gehostet"). Diese third party software dient insbesondere dazu, Abfragen optimieren, zumindest hinsichtlich einer Abfragedauer beschleunigen zu können, aber auch, um konkret abzurufende Daten bei dem entsprechenden Netzwerk zusammenstellen zu können. Optional ist die third party software auch dazu eingerichtet, bei einer Abfrage nur nach voreingestellten Daten zu der jeweiligen Person zu suchen.

In einer bevorzugten Verfahrensvariante wird die eingeholte Hintergrundinformation über die andere Person vor Ausgabe an den Hörgeräteträger konsolidiert. Vorzugsweise erfolgt diese Konsolidierung durch den (insbesondere cloudbasierten) Abfragedienst. Die Konsolidierung hat dabei den Vorteil, dass der Hörgeräteträger nur mit einer eingegrenzten Informationsmenge konfrontiert wird.

In einer zweckmäßigen Weiterbildung wird bei der Konsolidierung ein datumsbasiertes Sortieren, ein Löschen von Informationsdubletten (die bspw. durch gleiche Informationen aus verschiedenen sozialen Netzwerken gebildet werden), eine Berücksichtigung von Informationen nur jüngeren Datums bezüglich einer vorangegangenen Abfrage oder eines Referenzdatums und/oder eine themenbezogene Filterung vorgenommen. Bspw. werden dabei nur Informationen neueren Datums, das der Hörgeräteträger optional selbst vorgeben kann und/oder das ggf. auf den letzten Abfragezeitpunkt gesetzt wird, ausgegeben. Bei der Filterung werden bspw. nur Themen berücksichtigt, die den Hörgeräteträger interessieren - bspw. wurden dessen Interessen ggf. Personen- oder Personenkreis-bezogen (bspw. für die spezifische Person, Verwandte und Bekannte unterschiedlich) hinterlegt. Hierfür können bspw. elektronische Notizbücher, optional ein für Hörgeräteträger verfügbares Audionotizbuch (bspw. bekannt aus DE 10 2018 209 821 A1) und dergleichen genutzt werden, die dem Abfragedienst zur Einsicht freigegeben sind. Des Weiteren werden alternativ oder zusätzlich auch von der anderen Person oder allgemein als von besonderem Interesse geltende Themen berücksichtigt, bspw. Schulabschluss, Berufsausbildung, Heirat, Krankheit, Teilnahme an Veranstaltungen, Erfolg bspw. im Sport und dergleichen.

In einer weiteren zweckmäßigen Verfahrensvariante werden die dem Hörgeräteträger zu präsentierenden Audiodaten von dem Abfragedienst erstellt und - gegebenenfalls über das zwischengeschaltete elektronische Gerät, bspw. das Smartphone des Hörgeräteträgers - an das Hörgerät übermittelt. Dadurch fällt am Hörgerät selbst keine bezüglich der Erstellung der Audiodaten erforderliche Rechenleistung an.

In einer vorteilhaften Verfahrensvariante erfolgt die akustische Darbietung der Audiodaten an den Hörgeräteträger erst auf eine Freigabe durch den Hörgeräteträger selbst. Optional wird dem Hörgeräteträger angeboten, die Audiodaten sofort oder zu einem späteren Zeitpunkt (bspw. durch eine entsprechende Betätigung eines Bedienelements des Hörgeräts oder des ggf. in das Verfahren eingebundenen Mobilgeräts) abzuspielen. Dadurch kann dieser gegebenenfalls einen passenden Zeitpunkt für die Darbietung selbst wählen oder die Darbietung in einer ungünstigen Situation ablehnen. Eine Überschneidung der akustischen Darbietung mit einem Gespräch - ggf. mit der anderen Person selbst - kann somit verhindert werden. Bspw. kann - im Fall einer Einladung oder dergleichen - der Hörgeräteträger sich die Audiodaten erst dann anhören, wenn er seine Aufmerksamkeit darauf richten kann, bspw. nach der Begrüßung der anderen Person, wenn er für diese Getränke holt oder dergleichen.

Das erfindungsgemäße Hörgerätesystem weist in jedem Fall das vorstehend beschriebene Hörgerät des Hörgeräteträgers auf sowie eine Steuereinheit, die dazu eingerichtet ist, das vorstehend beschriebene Verfahren vorzugsweise selbsttätig, gegebenenfalls in Interaktion mit dem Hörgeräteträger durchzuführen.

Das Hörgerätesystem weist dabei die im Vorstehenden beschriebenen Vorteile sowie die sich aus dem erfindungsgemäßen Verfahren ergebenden körperlichen Merkmale gleichermaßen auf.

In einer bevorzugten Ausführung weist das Hörgerätesystem das vorstehend beschriebene, im bestimmungsgemäßen Gebrauch dem Hörgeräteträger zugeordnetes elektronische Gerät, vorzugsweise Mobilgerät, insbesondere das Smartphone oder Tablet auf. Auf diesem Gerät (Mobilgerät) ist die Steuereinheit zumindest teilweise, vorzugsweise in Form eine Software-Applikation ("App") implementiert. Außerdem ist das Mobilgerät zur Kommunikation mit dem Hörgerät eingerichtet. Des Weiteren weist das Hörgerätesystem einen Netzwerkrouter auf, mit dem im bestimmungsgemäßen Betrieb das Mobilgerät verbunden ist. Ferner weist das Hörgerätesystem - zumindest für die Durchführung des vorstehend beschriebenen Verfahrens - auch den vorstehend beschriebenen Abfragedienst auf, der zur Kommunikation mit dem Mobilgerät (optional mittelbar über den Router) und wenigstens einem sozialen Netzwerk eingerichtet ist.

Bei dem Abfragedienst handelt es sich insbesondere um ein vorzugsweise "vermittelndes Infrastrukturelement", das bspw. eine vom Hörgerätehersteller oder einem Dienstanbieter bereitgestellte zentrale Instanz darstellt, auf die von mehreren Geräten jeweils unterschiedlicher Hörgeräteträger zugegriffen werden kann. Vorzugsweise handelt es sich bei dem Abfragedienst um eine Software-Applikation, die auf einem Server, vorzugsweise auf einem Cloud-Rechenzentrum lauffähig implementiert ist. Bspw. wird dieser Abfragedienst dabei als "containerisierte" Applikation bereitgestellt. Vorzugsweise ist bei der Durchführung des vorstehend beschriebenen Verfahrens also die für den jeweiligen Hörgeräteträger bereitgestellte (oder "gestartete") Instanz des Abfragedienstes als Teil des Hörgerätesystems zu betrachten.

Die Steuereinheit, zumindest deren auf dem Mobilgerät implementierter Teil übernimmt dabei insbesondere die Detektion der für die Begegnung charakteristischen Information, das Ableiten der (ggf. bevorstehenden) Begegnung aus dieser Information, den Abgleich der Information mit den Kontakten des Hörgeräteträgers sowie die Stellung der Anfrage an den Abfragedienst. Außerdem übernimmt dieser Teil der Steuereinheit die Weiterleitung der vom Abfragedienst bereitgestellten Informationen, die insbesondere bereits als Audiodaten vorliegen, an das Hörgerät.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer schematischen Darstellung ein Hörgerätesystem im bestimmungsgemäßen Betrieb, und
- Fig. 2: in einem schematischen Ablaufdiagramm ein Verfahren, das von dem Hörgerätesystem durchgeführt wird.

Einander entsprechende Teile sind in allen Figuren stets mit gleichen Bezugszeichen versehen.

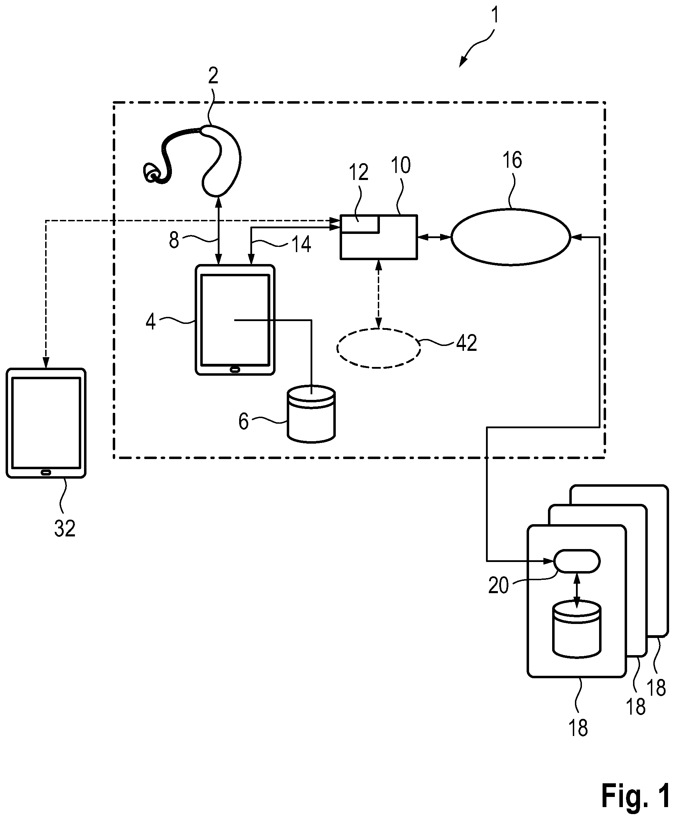

Fig. 1 zeigt schematisch ein Hörgerätesystem 1 im bestimmungsgemäßen Betrieb. Das Hörgerätesystem 1 ist dabei mit einer strichlinierten Umrandung dargestellt und umfasst wenigstens ein einem Benutzer (im Folgenden: Hörgeräteträger) zugeordnetes, d. h. von diesem verwendetes Hörgerät 2. Optional kann es sich dabei auch um ein Paar binaurale Hörgeräte handeln. Des Weiteren umfasst das Hörgerätesystem 1 als ein elektronisches (Mobil-) Gerät des Hörgeräteträgers ein Smartphone 4. Auf diesem ist eine Software-Applikation (im Folgenden "App") lauffähig installiert, die einen Teil einer Steuereinheit des Hörgerätesystems 1 bildet. Diese Steuereinheit ist dazu eingerichtet, ein im Folgenden näher beschriebenes Verfahren durchzuführen. Auf dem Smartphone 4 ist in üblicher Weise eine Kontaktdatenbank 6 mit Namen und Adressen ("Kontaktdaten") von dem Hörgeräteträger bekannten Personen hinterlegt oder verknüpft. Das Smartphone 4 und das Hörgerät 2 sind zur Kommunikation untereinander eingerichtet und im bestimmungsgemäßen Betrieb zum Datenaustausch miteinander - konkret mittels einer Funkverbindung 8 (bspw. nach dem Bluetooth-Standard) - verbunden.

Das Hörgerätesystem 1 weist außerdem - zumindest im bestimmungsgemäßen Betrieb - einen Router 10 auf, der zur Bereitstellung eines lokalen Heimnetzwerks des Hörgeräteträgers eingerichtet ist. Dazu stellt der Router 10 einen sogenannten "wireless access point 12" bereit, an dem im bestimmungsgemäßen Betrieb das Smartphone 4 des Hörgeräteträgers mittels einer weiteren Funkverbindung 14 angemeldet ist. Ferner weist das Hörgerätesystem 1 einen Abfragedienst 16, zumindest eine spezifisch für das jeweilige Hörgerätesystem 1 bei Zugriff gestartete Instanz, auf, der auf einem Cloud-Rechenzentrum gehostet ist. Die App steht mit diesem Abfragedienst 16 via den Router 10 in Verbindung. Der Abfragedienst 16 ist wiederum unter anderem dazu eingerichtet, bei sozialen Netzwerken 18 Anfragen über eine Hintergrundinformation zu spezifischen Personen zu stellen und entsprechende Antworten seitens der sozialen Netzwerke zu erhalten.

In einem optional Ausführungsbeispiel stellt der Abfragedienst 16 die Anfragen über sogenannte, bei dem jeweiligen sozialen Netzwerk 18 gehostete "third party software Module 20". Diese sind - sofern genutzt - in gleicher Weise wie die entsprechende Instanz des Abfragedienstes 16 ebenfalls als Teil des Hörgerätesystems 1 zu betrachten.

Das Hörgerätesystem 1 ist dazu eingerichtet, bei einer Begegnung des Hörgeräteträgers mit einer anderen Person, die Begegnung zu detektieren, die andere Person zu identifizieren, aus den sozialen Netzwerken 18 eine Hintergrundinformation zu dieser Person zu beziehen und diese Hintergrundinformation dem Hörgeräteträger zur Verfügung zu stellen.

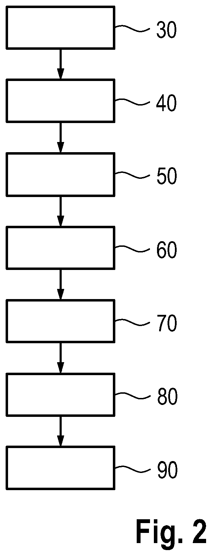

Dazu erfasst die auf dem Smartphone 4 des Hörgeräteträgers installierte App in einem ersten Verfahrensschritt 30 (s. Fig. 2), wenn sich - konkret bei einem Besuch einer Person bei dem Hörgeräteträger - ein mobiles, elektronisches Endgerät, konkret ein Smartphone 32 dieser Person (im Folgenden: "der Besucher") am wireless access point 12 des Routers 10 des Hörgeräteträgers anmeldet - gegebenenfalls mit Freigabe der Anmeldung durch den Hörgeräteträger. Bei erfolgter Anmeldung versendet der Router 10 an alle Netzwerkteilnehmer - also auch an das Smartphone 4 - einen eindeutigen Identifikator, üblicherweise die sogenannte MAC-Adresse des Smartphones 32 des Besuchers. Der Empfang dieses Identifikators am Smartphone 4 wird von der App dabei als charakteristische Information herangezogen, dass sich der Hörgeräteträger und der Besucher gerade begegnen.

Darauf sucht die App in einem zweiten Verfahrensschritt 40 in den Kontaktdaten des Hörgeräteträgers, also in der Kontaktdatenbank 6, nach dem Identifikator zugeordneten Kontaktdaten. Für den Fall, dass dies der erste Besuch ist, fragt die App optional den Hörgeräteträger um Eingabe der Person, deren Smartphone 32 aktuell am Router 10 angemeldet wurde. Falls vorhanden, übermittelt die App anschließend die Kontaktdaten des Besuchers an den Abfragedienst 16.

In einem alternativen Ausführungsbeispiel wird - im Fall des ersten Besuchs und somit dem erstmaligen Einloggen des Smartphones 32 des Besuchers am Router 10 - mittels eines Webservices 42 auf dem Smartphone 32 des Besuchers eine Website angezeigt, die den Besucher zur Eingabe seiner Person (also des Namens und dergleichen) auffordert. Mit diesen Informationen sucht die App anschließend in den Kontaktdaten des Hörgeräteträgers nach den dem Besucher zugeordneten. Auch der Webservice 42, zumindest dessen entsprechende Instanz ist analog zum Abfragedienst 16 - sofern genutzt - als Teil des Hörgerätesystems 1 zu betrachten.

Der Abfragedienst 16 erstellt in einem weiteren Verfahrensschritt 50 eine Anfrage zur Hintergrundinformation (bspw. wann die letzte Prüfung, der letzte sportliche Wettkampf, die Hochzeit oder dergleichen, was die letzten Postings, Blogeinträge etc. waren) zu dem Besucher. Diese Anfrage leitet der Abfragedienst 16 an verschiedene soziale Netzwerke 18, optional an die dort gehosteten, zugehörigen third party Software Module 20 weiter.

In einem weiteren Verfahrensschritt 60 empfängt der Abfragedienst 16, ggf. über die jeweiligen third party software Module 20, Antworten seitens der sozialen Netzwerke 18, die potentiell die angefragte Hintergrundinformation enthalten. Der Abfragedienst 16 konsolidiert nun die mit den Antworten empfangenen Informationen hinsichtlich Datum und Relevanz. Bspw. werden Informationsdubletten, die durch das Zusammenführen der Daten aus verschiedenen sozialen Netzwerken 18 entstehen, gelöscht, die empfangenen Daten zeitlich geordnet und - sofern nicht bereits anfrageseitig berücksichtigt - nur Daten mit einem Datum jünger als die ggf. vorhandene letzte Abfrage berücksichtigt. Des Weiteren nutzt der Abfragedienst 16 nur Informationen, die der Hörgeräteträger bspw. bei der Einrichtung der App oder in einem digitalen Notizbuch als interessant für den spezifischen Besucher (oder einen Personenkreis, bspw. Verwandtschaft) kenntlich gemacht hat.

Aus den konsolidierten Daten erstellt der Abfragedienst 16 in einem nachfolgenden Verfahrensschritt 70 einen Text über den Besucher und wandelt diesen (insbesondere mittels herkömmlicher Text-zu-Sprache-Verfahren) in Audiodaten.

Anschließend übermittelt der Abfragedienst 16 diese Audiodaten in einem Verfahrensschritt 80 an das Smartphone 4 des Hörgeräteträgers.

In einem Verfahrensschritt 90 fragt das Smartphone 4, konkret also die App (insbesondere über das Hörgerät 2, vorzugsweise mittels einer gesprochenen Ansage, alternativ mittels einer Anzeige auf dem Display des Smartphones 4) beim Hörgeräteträger an, ob die Audiodaten abgespielt werden sollen. Bestätigt der Hörgeräteträger dies, sendet des Smartphone 4 die Audiodaten über die Funkverbindung 8 an das Hörgerät 2 und dieses spielt die Audiodaten dem Hörgeräteträger vor.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Hörgerätesystem
- 2: Hörgerät
- 4: Smartphone
- 6: Kontaktdatenbank
- 8: Funkverbindung
- 10: Router
- 12: wireless access point
- 14: Funkverbindung
- 16: Abfragedienst
- 18: soziales Netzwerk
- 20: third party software Modul
- 30: Verfahrensschritt
- 32: Smartphone
- 40: Verfahrensschritt
- 42: Webservice
- 50: Verfahrensschritt
- 60: Verfahrensschritt
- 70: Verfahrensschritt
- 80: Verfahrensschritt
- 90: Verfahrensschritt

## Patentansprüche

1. Verfahren zum Betrieb eines Hörgerätesystems (1), wobei verfahrensgemäß
- eine für eine Begegnung zwischen einem ein Hörgerät (2) tragenden Hörgeräteträger und einer anderen Person charakteristische Information empfangen wird,
- anhand der Information auf ein vorliegendes oder bevorstehendes Aufeinandertreffen des Hörgeräteträgers mit der anderen Person geschlossen wird,
- eine Hintergrundinformation über die andere Person von wenigstens einem sozialen Netzwerk (18) eingeholt wird,
- die Hintergrundinformation über die andere Person in Audiodaten gewandelt werden, und
- die Audiodaten mittels des Hörgeräts (2) des Hörgeräteträgers diesem akustisch dargeboten werden,
wobei als charakteristische Information für die Begegnung ein bei einem Anmelden eines elektronischen Geräts (32), insbesondere eines Mobilgeräts der anderen Person an einem lokalen Netzwerk des Hörgeräteträgers übermittelter Identifikator herangezogen wird,
oder
wobei als charakteristische Information für die Begegnung ein in einem elektronischen Kalender des Hörgeräteträgers hinterlegtes, anstehendes Ereignis herangezogen wird.

2. Verfahren nach Anspruch 1,
wobei bei Vorliegen der charakteristischen Information für die Begegnung ermittelt wird, ob der Hörgeräteträger mit der anderen Person bekannt ist.

3. Verfahren nach Anspruch 1 oder 2,
wobei zum Einholen der Hintergrundinformation über die andere Person mit der anderen Person verknüpfte Identifikationsdaten einem Abfragedienst (16) zur Verfügung gestellt werden, mittels dessen Abfragen zu der anderen Person an verschiedene soziale Netzwerke (18) verteilt werden.

4. Verfahren nach einem der Ansprüche 1 bis 3,
wobei die eingeholte Hintergrundinformation über die Person vor Ausgabe an den Hörgeräteträger, insbesondere von dem Abfragedienst (16), konsolidiert werden.

5. Verfahren nach Anspruch 4,
wobei bei der Konsolidierung ein datumsbasiertes Sortieren, ein Löschen von Informationsdubletten, eine Berücksichtigung von Informationen nur jüngeren Datums bezüglich einer vorangegangenen Abfrage oder eines Referenzdatums und/oder eine themenbezogene Filterung vorgenommen werden.

6. Verfahren nach einem der Ansprüche 3 bis 5,
wobei die Audiodaten von dem Abfragedienst (16) erstellt und an das Hörgerät (2) übermittelt werden.

7. Verfahren nach einem der Ansprüche 1 bis 6,
wobei die akustische Darbietung der Audiodaten erst auf eine Freigabe durch den Hörgeräteträger erfolgt.

8. Hörgerätesystem (1), aufweisend
wenigstens ein Hörgerät (2), und eine Steuereinheit, die dazu eingerichtet ist, das Verfahren nach einem der Ansprüche 1 bis 7 durchzuführen.

9. Hörgerätesystem (1) nach Anspruch 8,
mit einem, im bestimmungsgemäßen Gebrauch dem Hörgeräteträger zugeordneten Mobilgerät (4), auf dem die Steuereinheit zumindest teilweise implementiert ist und das zur Kommunikation mit dem Hörgerät (2) eingerichtet ist, mit einem Netzwerkrouter (10), mit dem im bestimmungsgemäßen Betrieb das Mobilgerät (32) verbunden ist, und mit einem Abfragedienst (16), der zur Kommunikation mit dem Mobilgerät (32) und wenigstens einem sozialen Netzwerk (18) eingerichtet ist.

## Claims

1. Method of operating a hearing device system (1), wherein according to the method
- an information characteristic of an encounter between a hearing device wearer (2) and another person is received,
- based on the information, a present or imminent encounter of the hearing device wearer with the other person is inferred,
- a background information about the other person is collected from at least one social network (18),
- the background information about the other person is converted into audio data, and
- the audio data is presented acoustically to the hearing device wearer by means of the hearing device (2) of the hearing device wearer,
wherein an identifier transmitted during a logon of an electronic device (32), in particular of a mobile device, of the other person to a local network of the hearing device wearer is used as characteristic information for the encounter, or
wherein an upcoming event stored in an electronic calendar of the hearing device wearer is used as characteristic information for the encounter.

2. Method according to claim 1,
wherein, if the characteristic information for the encounter is available, it is determined whether the hearing device wearer is known to the other person.

3. Method according to claim 1 or 2,
wherein, for obtaining background information about the other person, identification data associated with the other person is provided to a query service (16), by means of which queries about the other person are distributed to various social networks (18).

4. Method according to one of claims 1 to 3,
wherein the obtained background information about the person is consolidated before being output to the hearing device wearer, in particular by the query service (16).

5. Method according to claim 4,
wherein upon consolidation, date-based sorting, deletion of duplicate information, consideration of information of only recent date with respect to a previous query or reference date, and/or subject-based filtering are performed.

6. Method according to one of claims 3 to 5,
wherein the audio data is created by the query service (16) and transmitted to the hearing device (2).

7. Method according to one of claims 1 to 6,
wherein the acoustic presentation of the audio data only takes place upon approval by the hearing device wearer.

8. Hearing device system (1), comprising
at least one hearing device (2), and a control unit configured to perform the method according to one of claims 1 to 7.

9. Hearing device system (1) according to claim 8,
having a mobile device (4), which, in the intended use, is assigned to the hearing device wearer, in and on which the control unit is at least partially implemented and which is configured for communication with the hearing device (2), having a network router (10), to which the mobile device (32) is connected in the intended use, and having a query service (16), which is configured for communication with the mobile device (32) and at least one social network (18).

## Revendications

1. Procédé de fonctionnement d'un système d'appareil auditif (1), dans lequel, selon le procédé
- une information caractéristique pour une rencontre entre un porteur d'appareil auditif portant un appareil auditif (2) et une autre personne est reçue,
- sur la base de l'information une rencontre présente ou imminente entre le porteur de l'appareil auditif et l'autre personne est déduit,
- une information de base sur l'autre personne est obtenue auprès d'au moins un réseau social (18),
- les informations de fond sur l'autre personne sont converties en données audio, et
- les données audio sont présentées de manière acoustique au porteur de de l'appareil auditif à l'aide de l'appareil auditif (2) du porteur de l'appareil auditif, dans lequel un identifiant transmis lors d'une connexion d'un appareil électronique (32), en particulier d'un appareil mobile, de l'autre personne à un réseau local du porteur de l'appareil auditif, est utilisé comme information caractéristique de la rencontre,
ou
dans lequel un événement à venir enregistré dans un calendrier électronique du porteur de l'appareil auditif est utilisé comme information caractéristique pour la rencontre.

2. Procédé selon la revendication 1,
dans lequel, en présence de l'information caractéristique pour la rencontre, il est détermine si le porteur de l'appareil auditif est connu de l'autre personne.

3. Procédé selon la revendication 1 ou 2,
dans lequel, pour obtenir l'information de fond sur l'autre personne, des données d'identification associées à l'autre personne sont fournies d'un service d'interrogation (16), au moyen duquel des interrogations sur l'autre personne sont distribuées à différents réseaux sociaux (18).

4. Procédé selon l'une des revendications 1 à 3,
dans lequel l'information de fond obtenue sur la personne est consolidés avant d'être délivrés au porteur de l'appareil auditif, en particulier par le service d'interrogation (16).

5. Procédé selon la revendication 4,
dans lequel lors de la consolidation, un tri basé sur la date, un effacement de doublons d'informations, une prise en compte d'informations uniquement récentes par rapport à une interrogation précédente ou à une date de référence et/ou un filtrage thématique sont effectués.

6. Procédé selon l'une des revendications 3 à 5,
dans lequel les données audio sont créées par le service d'interrogation (16) et transmises à l'appareil auditif (2).

7. Procédé selon l'une des revendications 1 à 6,
dans lequel la présentation acoustique des données audio n'a lieu qu'après validation par le porteur de l'appareil auditif.

8. Système d'appareil auditif (1), comprenant
au moins un appareil auditif (2), et une unité de commande configurée pour réaliser le procédé selon l'une des revendications 1 à 7.

9. Système d'appareil auditif (1) selon la revendication 8,
avec un appareil mobile (4) attribué au porteur de l'appareil auditif lors de l'utilisation prévue, sur lequel l'unité de commande est au moins partiellement implémentée et qui est configuré pour communiquer avec l'appareil auditif (2), avec un routeur de réseau (10), auquel l'appareil mobile (32) est connecté lors du fonctionnement prévu, et avec un service d'interrogation (16), qui est configuré pour la communication avec l'appareil mobile (32) et au moins un réseau social (18).
